# EUROPEAN PATENT APPLICATION

(11) **EP 2 955 671 A1**
(43) Date of publication of application: **16.12.2015**
(21) Application number: 14180051.6
(22) Date of filing: 06.08.2014
(51) Int. Cl.: G06Q 10/06

(54) **System and method of processing and outputting a diagram for factory location evaluation**

(30) Priority: 12.06.2014 TW 103120325
(71) Applicant: Environmental Protection Administration, R.O.C.(Taiwan), Taipei City 10042 (TW)
(72) Inventor: Tsai, Hung-Teh, Taipei City 10042 (TW); Yang, Kai-Hsing, Taipei City 10042 (TW); Chen, Shen-De, Taipei City 11083 (TW); Kuan, Yung-Kai, Taipei 10694 (TW); Sun, Tung-Ching, Taipei City 10042 (TW)
(74) Representative: Gee, Steven William

(57) **Abstract**

There is provided a method for processing and outputting a diagram of factory location evaluation, which is executed by a server to implement the following steps: receiving at least a GPS location information and a site investigation information from a mobile device; relating the site investigation information to an area based on the GPS location information and a coverage region information, wherein the coverage region information records a coverage of specific region on a map; and processing the site investigation information and a regional distribution, then generating and outputting a factory location evaluation information to a terminal computer based on the results of the process.

## Description

### CROSS-REFERENCES TO RELATED APPLICATIONS

This application claims the priority of Taiwanese patent application No. 103120325, filed on June 12, 2014, which is incorporated herewith by reference.

### BACKGROUND OF THE INVENTION

### FIELD OF THE INVENTION

The present invention relates to a system and a method of processing and outputting a diagram for factory location evaluation.

### DESCRIPTION OF THE PRIOR ART

Site investigation has always been an important part for the society nowadays. For example, it is necessary to conduct site investigations before construction or planting in order to understand whether or not this area is suitable for these tasks. Moreover, a comprehensive site investigation and analysis are also required for areas with high pollution risks, such as abandoned factories, as to know which areas have been polluted and are in need of immediate improvement.

However, site investigation is not an easy task which requires lots of human resource and very time consuming. Traditionally, site investigation requires an investigator to collect sampling and investigation records, these records then become the basis of the investigation report. However, this process always cost too much time and the latest information cannot be obtained in real time.

In addition, by using the traditional site investigation method, the statistical data and environmental assessment map cannot be updated in real time. For example, although the investigator visits the site of recently polluted area due to intentional release of chemical waste immediately, the environmental assessment report is unable to be updated straightway based on the investigation result and sampling thereof.

### SUMMARY OF THE INVENTION

In view of the above problems associated with prior art technology, an object of the present invention is to provide a system and method of processing and outputting a diagram of factory location evaluation based on the information obtained from site investigation, such that the backend staffs can immediately obtain the entire factory location evaluation after receiving the investigation information. Moreover, the evaluation can be easily understood, such that the factory location evaluation can be quickly grasped.

According to the object of the present invention, there is provided a method for processing and outputting a diagram of factory location evaluation, which is performed by a server to implement the following steps: receiving at least a GPS location information and a site investigation information from a mobile device; relating the site investigation information to an area based on the GPS location information and a coverage region information, wherein the coverage region information records a coverage of specific region on a map; and processing the site investigation information and a regional distribution, then generating and outputting a factory location evaluation information to a terminal computer based on the results of the process.

According to the aforementioned object, wherein the server provides a site investigation data input webpage and a GPS location input webpage such that a user can browse the site investigation data input webpage and the GPS location input webpage via a web browser of the mobile device, and the user can input the site investigation information via the site investigation data input webpage and GPS location information via the GPS location input webpage.

According to the aforementioned object, wherein the factory location evaluation information is a boundary plan of site investigation drawn on a digital map by using boundary lines to define a coverage region and marking the site investigation information to the coverage region based on the GPS location information.

According to the aforementioned object, wherein the coverage region can be configured by an application program installed in the mobile device.

According to the aforementioned object, the present invention further implements the following step after executed by the server: calculating and outputting an inventory information on one or more of the total amount of check operation, current checked amount, period of check operation, completion rate of check operation.

According to the aforementioned object, wherein processing the site investigation information and the regional distribution comprises statistical analyzing the site investigation information and the regional distribution.

According to the aforementioned object, based on different samples, wherein the site investigation information comprises one or more information on site investigation, soil sampling, underground water sampling and waste sampling.

According to the aforementioned object, wherein the specific region is a region regarding abandoned factory.

According to an object of the present invention, there is provided a method for processing and outputting a diagram of factory location evaluation, which is implemented by a server, comprises the following steps: receiving at least a GPS location information and a site investigation information from a mobile device; relating the site investigation information to an area based on the GPS location information and a coverage region information, wherein the coverage region information records a coverage of specific region on a map; and statistical analyzing the site investigation information and a regional distribution, then generating and outputting a factory location evaluation information to a terminal computer based on result of the statistical analysis.

According to the aforementioned object, the present invention further comprises the following step: providing an application program to the mobile device, the application program is to be installed to the mobile device and be executed in order to let a user delivers the GPS location information of the mobile device and the site investigation information to the server via Internet or mobile network.

According to the aforementioned object, the present invention further comprises the following step: providing a site investigation data input webpage and a GPS location input webpage such that a user can browse the site investigation data input webpage and the GPS location input webpage by a web browser of the mobile device, and the user can input the site investigation information via the site investigation data input webpage and GPS location information via the GPS location input webpage.

According to the aforementioned object, wherein the factory location evaluation information is a boundary plan of site investigation drawn on a digital map by overlaying layers to define a coverage region and marking the site investigation information to the coverage region based on the GPS location information.

According to the aforementioned object, the present invention further comprises the following step: calculating and outputting an inventory information on one or more of total amount of check operation, current checked amount, period of check operation, completion rate of check operation.

According to an object of the present invention, there is provided a system for processing and outputting a diagram of factory location evaluation comprising a environmental assessment statistics server and one or more mobile devices, the environmental assessment statistics server and the mobile devices exchange data to implement the following steps: the mobile devices uploads a GPS location information and a site investigation information to the environmental assessment statistics server; the environmental assessment statistics server relates the site investigation information to an area based on the GPS location information and a coverage region information, wherein the coverage region information records a coverage of the specific region on a map; and the environmental assessment statistics server processes the site investigation information and a regional distribution, then generating and outputting a factory location evaluation information to a terminal computer based on the result of the process.

According to the aforementioned object, the present invention further comprises the following step: the environmental assessment statistics server provides an application program to the mobile device, the application program is to be installed to the mobile device and be executed in order to let a user delivers the GPS location information of the mobile device and the site investigation information to the server via Internet or mobile network.

Therefore, the aforesaid system and method of analyzing and outputting a diagram of factory location evaluation have the following advantages: the backend staffs can immediately obtain the evaluated factory location based on the analysis and statistics of the latest investigation information; and the entire/separate factory location evaluation can be quickly grasped.

### BRIEF DESCRIPTION OF THE DRAWINGS

Fig. 1 is an architecture diagram regarding an embodiment of outputting a diagram of factory location evaluation.
Fig. 2 is a flowchart which illustrates each step of an embodiment regarding method of outputting a diagram of factory location evaluation.
Fig. 3 is an aerial image which illustrates the boundary plan of site investigation in one embodiment.

### DETAILED DESCRIPTION OF THE PREFERRED EMBODIMENTS

The present invention now will be described more fully hereinafter with reference to the accompanying drawings, in which preferred embodiments of the invention are shown. Numerals mentioned in the following description refer to those shown in the drawings. It should be noted that the words "comprising" or "including" used in the description shall be interpreted as open-ended terms with the meaning of "including but not limited to." Moreover, those of ordinary skill in the art should understand that, there may be different designations for the same component/product; for example, a "digital map" and an "electronic map" or a "mobile device" and a "portable device" may refer to the same component/product. Therefore, components/products that are of the same technical field and similar to those mentioned in the following description should also be included in the scope of the present invention.

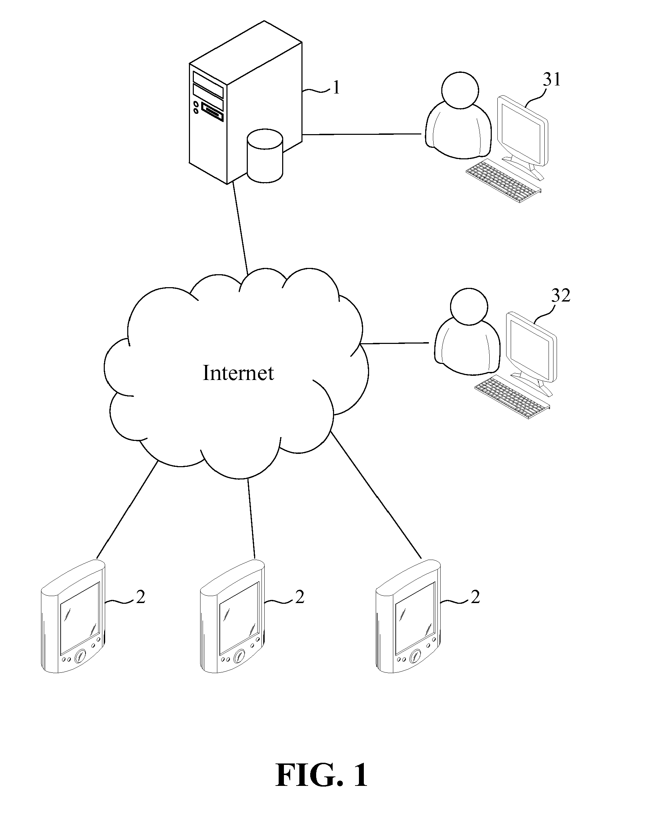

Fig. 1 is an architecture diagram regarding an embodiment of outputting a diagram of factory location evaluation. As Fig. 1 shows, the system of present invention comprises an environmental assessment statistics server 1, one or more mobile devices 2, terminal computer 31 and terminal computer 32.

The mobile devices 2 connect the environmental assessment statistics server 1 via Internet, such that the environmental assessment statistics server 1 can receive GPS location information and site investigation information from the mobile devices 2 in real time. The terminal computer 31 connects the environmental assessment statistics server 1 via LAN (local area network), such that the terminal computer 31 can obtain a factory location evaluation information from the environmental assessment statistics server 1, wherein the factory location evaluation information is generated by the environmental assessment statistics server 1 based on the statistics or analysis of the site investigation information and distribution information. The terminal computer 32 connects the environmental assessment statistics server 1 via Internet, and factory location evaluation information can also be obtained from the environmental assessment statistics server 1 after login or authentication.

In the present invention, the aforesaid server represents a service end which provides process, database or connection service, including but not limited to a single processor with a connecting device and/or data storage device and/or database device, or a networked or clustered processor complex; a related network and/or storage device; an operating system with one or more database; and/or application programs installed in the server for providing service.

In the present invention, the mobile devices 2 can choose from any device with a graphical Interface which also has the ability to access Internet or mobile network such as smart phones, tablet PCs, notebooks, PDA, etc. Moreover, the terminal computers 31 and 32 are a computing device for general purpose which has a CPU, memory unit, permanent storage, optical device, universal serial bus port, audio / video output device, network interface, etc. However, those of ordinary skill in the art should understand that the terminal devices 31 and 32 can also be a mobile device, such as smart phones, tablet PCs, notebooks or PDA, which can use specific application or browser to display the factory location evaluation information obtained from the environmental assessment statistics server 1.

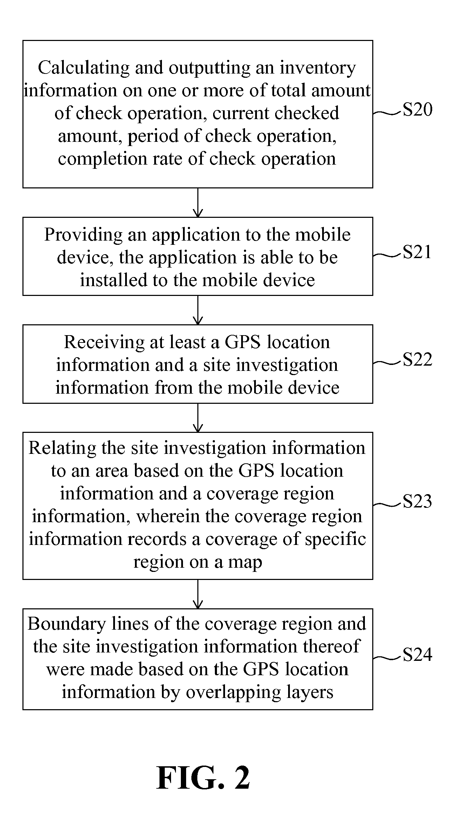

Fig. 2 illustrates each step of an embodiment regarding method of outputting a diagram of factory location evaluation. These steps are implemented based on the system illustrated above for Fig. 1.

As shown in step S20, the environmental assessment statistics server 1 calculates an inventory information regarding a target area based on one or more of the total amount of check operation, current checked amount, period of check operation, completion rate of check operation, etc., and outputs it to the terminal computers 31 and 32 (reference numbers can be found in Fig. 1). Table 1 is an example of the inventory information of the present invention. As shown in Table 1, the environmental assessment statistics server 1 counts and summarizes current inventory progress rate and overall inventory completion rate based on the site investigation information, such that the user can figure out the overall status of current factory location evaluation easily and quickly, wherein the aforesaid site investigation information is preferably provided by the mobile device 2. The inventory information includes region, total amount of inventory, investigation period, expectation number, completion number, cumulative number of completion, completion rate, etc. Moreover, region can be further divided into smaller areas in order to view the completion status individually. For example, region A can be divided into A1 and A2 (e.g. dividing Taipei into Taipei city and New Taipei City), thus the total and individual working status of the site investigation can be obtained.

**Table 1**

| Region | total amount of inventory | investigation period | | cumulative number of completion | completion rate |
|---|---|---|---|---|---|
| | | expectation number | completion number | | |
| A | 100 | 100 | 100 | 100 | 100% |
| A1 | 60 | 60 | 60 | 60 | 100% |
| A2 | 40 | 40 | 40 | 40 | 100% |
| B | 50 | 50 | 40 | 40 | 80% |
| C | 20 | 10 | 5 | 10 | 50% |

By using the inventory information shown above, users can keep abreast of completed and ongoing tasks of inventory/investigation. Moreover, the completion rate provided by the system allows users to learn the overall status immediately, which makes the work and process mentioned below easier to implement.

As step S21 shown in Fig. 2, providing an application program to the mobile 2 (illustrated in Fig. 1), the application program can be installed in the mobile device 2 to provide an interface of the diagram outputting system of the factory location evaluation to the user. Step S22 shows that after the application program has been initiated by a user for site investigation, the application program will return GPS location information and site investigation information in real time. In another words, when the user uses the mobile device 2 to conduct site investigation and sampling operation, after the user enters observation information or site investigation information (e.g. sampling information, visual information, measuring information, photo, etc.) into the mobile device 2, the mobile device 2 will immediately return current GPS location information, observations information or site investigation information to the environmental assessment statistics server 1 via Internet or mobile network.

In one embodiment, the environmental assessment statistics server 1 provides one or more webpages for entering investigation information and GPS location information, such that the user can input investigation information and GPS location information through a browser of the mobile device 2. In one embodiment, the webpages comprise a GPS location inputting webpage for entering GPS location information, and an investigation information inputting webpage for entering investigation information. After entering the data, the mobile device 2 then delivers the information to the environmental assessment statistics server 1 via Internet or mobile network. The GPS location inputting webpage comprises a digital map to show the user his location. After the user clicks a location on the digital map, the mobile device 2 delivers the clicked location of the digital map to a remote site for transferring the clicked location to the GPS location information. In the present invention, the investigation information comprises one or more information on site investigation, soil sampling, underground water sampling and waste sampling.

Step S23 shows that the environmental assessment statistics server 1 relates the investigation information to a specific region based on the GPS location information and coverage region information, wherein the coverage region information records the coverage of a specific region on a map. That is, the environmental assessment statistics server 1 comprises a digital map, wherein the source of the map comes from Internet or local network, or information stored in the storage device thereof. The coverage region information also records usage of a specific region in this digital map (e.g. recording the region which has been used as a factory). Accordingly, after combining the digital map with the coverage region information, the environmental assessment statistics server 1 can calculate and provide information on the usage of a specific region in the digital map. For example, assuming that the specific region is a region of abandoned factory, high-risk contamination areas thereof can be found by combining the digital map with the coverage region information. After that, the environmental assessment statistics server 1 relates all investigation information to the digital map with the coverage region information based on the GPS location information and the investigation information provided by the mobile device 2, such that the environmental assessment statistics server 1 can proceed with the calculation, statistics and analysis based on the GPS location information, investigation information and coverage region information to output a factory location evaluation information to terminal computers 31 and 32.

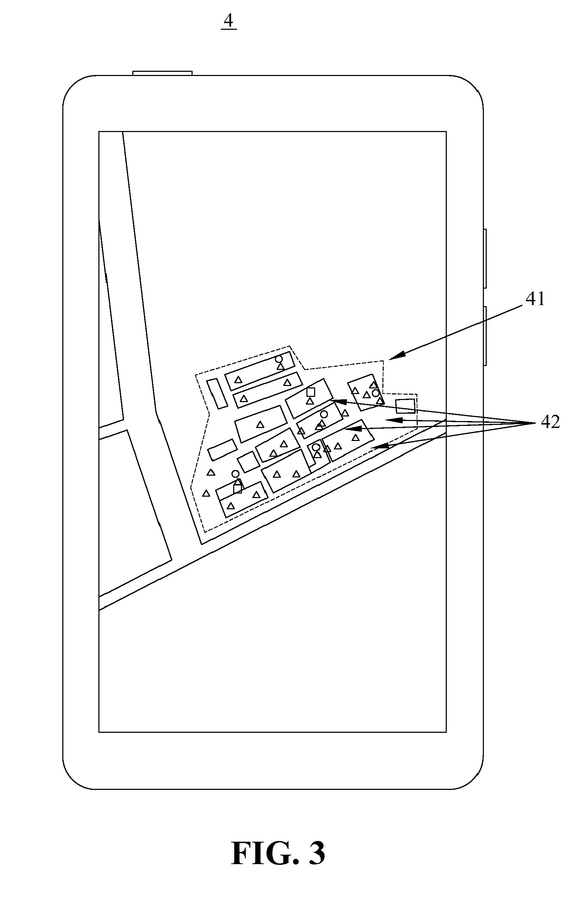

Step S24 shows that the factory location evaluation information is a boundary plan of site investigation. The environmental assessment statistics server 1 draws boundary lines of the coverage region and marks the site investigation information to the coverage region based on the GPS location information by overlapping layers. As shown in Fig. 3, which is an aerial image illustrating the boundary plan of site investigation in one embodiment, digital map 4 is marked with the coverage region information 41 (the region drawn in dotted lines) and the actual coverage region information 42 (the region drawn in solid line) by overlapping layers, wherein the coverage region information 41 indicates these regions with specific purposes in the digital map 4, e.g. these regions have been used for factories. The actual coverage region information 42 indicates detailed usage and scope thereof regarding coverage region information 41, e.g. indicating the boundary of the buildings. As a result, the specific purpose and detailed usage of these regions are shown clearly on the digital map 4, such that the user can quickly obtain comprehensive information by viewing the terminal computers 31 and 32.

After marking the coverage region information 41 and the actual coverage region information 42 to the digital map 4 by overlapping layers, the environmental assessment statistics server 1 then marks the investigation information into the digital map 4 by using the GPS location information thereof obtained from the mobile device 2. For example, triangle icons indicate investigation information of soil sample, circle icons indicate investigation information of underground water sample, and square icons indicate investigation information of waste sample. The numbers next to these icons represent sampling numbers or investigation numbers. Furthermore, the digital map also shows layers' content, legend, scale, compass, remarks, etc, in order to fully illustrate all relevant information, such that the achievement in every stage of the evaluation process can be clearly revealed. The coverage region information 41 and the actual coverage region information 42 can be configured through an application program installed in the mobile device 2, such that the investigator can modify the coverage region information 41 and the actual coverage region information 42 based on site conditions.

In addition, when a user views this digital map with the terminal computer 31 or 32, detailed information regarding investigation can be seen by clicking on these icons (e.g. triangle icons, circle icons and square icons), such as investigators list, information of investigators, information of investigation tools, records of soil sampling, records of underground water sampling, records of waste sampling, basic information of observation wells, other matters, confirm lists, etc.

Therefore, by using the system and method of analyzing and outputting a diagram of factory location evaluation mentioned above, the environmental assessment statistics server can immediately calculate and output investigation scope with detailed information after receiving investigation information from the mobile device, such that the backend staffs can obtain aforesaid scope and information without any delay. In another words, the present invention combines the mobile device with the environmental assessment statistics server to provide real-time investigation scope and information that is easy to understand, such that the whole and individual factory location evaluation can be quickly obtained.

The embodiments depicted above and the appended drawings are exemplary and are not intended to limit the scope of the present invention. All modifications or alterations that have equivalent functions and are made without departing from the spirit and scope of the present invention fall within the scope of the appended claims.

## Claims

1. A method for processing and outputting a diagram of factory location evaluation, which is implemented by a server, comprising the steps of:
receiving at least a GPS location information and a site investigation information from a mobile device;
relating the site investigation information to an area based on the GPS location information and a coverage region information, wherein the coverage region information records a coverage of specific region on a map; and
statistical analyzing the site investigation information and a regional distribution,
then generating and outputting a factory location evaluation information to a terminal computer based on result of the statistical analysis.

2. The method according to claim 1 further comprising the step of:
providing an application program to the mobile device, the application program is to be installed to the mobile device and be executed in order to let a user delivers the GPS location information of the mobile device and the site investigation information to the server via Internet or mobile network.

3. The method according to claim 1 further comprising the step of:
providing a site investigation data input webpage and a GPS location input webpage such that a user can browse the site investigation data input webpage and the GPS location input webpage by a web browser of the mobile device, and the user can input the site investigation information via the site investigation data input webpage and GPS location information via the GPS location input webpage.

4. The method according to claim 2 or 3, wherein the site investigation data comprises one or more of sampling information, visual information, measuring information, photo, soil sampling, underground water sampling and waste sampling obtained by conducting site investigation and sampling operation.

5. The method according to claim 3, wherein the GPS location input webpage provides a digital map to the mobile device such that the user clicks a location on the digital map for transferring the clicked location to the GPS location information.

6. The method according to claim 1, wherein the factory location evaluation information is a boundary plan of site investigation drawn on a digital map by overlaying layers to define a coverage region and marking the site investigation information to the coverage region based on the GPS location information.

7. The method according to claim 6, wherein the position within the coverage region was once used as a factory location.

8. The method according to claim 6, further comprising the step of:
displaying high-risk contamination areas on the digital map provided to the terminal computer according to mark the site investigation information to the coverage region based on the GPS location information.

9. The method according to claim 6, further comprising the step of:
marking different icons on the digital map wherein the different icons represent the different kinds of site investigation information; and
displaying different icons on the digital map provided to the terminal computer.

10. The method according to claim 9, further comprising the step of:
displaying site investigation information of the clicked icon on the digital map provided to the terminal computer when a icon on the digital map is clicked.

11. The method according to claim 1 further comprising the step of:
calculating and outputting an inventory information of total amount of check operation, current checked amount, period of check operation, completion rate of check operation or a combination thereof related to a target area.

12. The method according to claim 11 further comprising the step of:
according the target area is divided into several areas, calculating total amount of check operation, current checked amount, period of check operation, completion rate of check operation or a combination thereof related to each area.

13. A system for processing and outputting a diagram of factory location evaluation comprising a environmental assessment statistics server, the environmental assessment statistics server communicates to at least one mobile device and at least one terminal computer and performs the following procedures:
receiving a GPS location information and a site investigation information uploaded by the mobile devices;
relating the site investigation information to an area based on the GPS location information and a coverage region information, wherein the coverage region information records a coverage of the specific region on a map; and
processing the site investigation information and a regional distribution, and then generating and outputting a factory location evaluation information to a terminal computer based on the result of the process.

14. The system according to claim 13, wherein the environmental assessment statistics server provides an application program to the mobile device, wherein the application program is to be installed to the mobile device and be executed in order to upload the GPS location information of the mobile device and the site investigation information to the server via a network.

15. The system according to claim 13, wherein the environmental assessment statistics server provides a site investigation data input webpage and a GPS location input webpage such that a user can browse the site investigation data input webpage and the GPS location input webpage by a web browser of the mobile device, and the user can input the site investigation information via the site investigation data input webpage and GPS location information via the GPS location input webpage.

16. The system according to claim 14 or 15, wherein the site investigation data comprises one or more of sampling information, visual information, measuring information, photo, soil sampling, underground water sampling and waste sampling obtained by conducting site investigation and sampling operation.

17. The system according to claim 15, wherein the GPS location input webpage provides a digital map to the mobile device such that the user clicks a location on the digital map for transferring the clicked location to the GPS location information.

18. The system according to claim 13, wherein the factory location evaluation information is a boundary plan of site investigation drawn on a digital map by overlaying layers to define a coverage region and marking the site investigation information to the coverage region based on the GPS location information.

19. The system according to claim 18, wherein the position within the coverage region was once used as a factory location.

20. The system according to claim 18, wherein the environmental assessment statistics server provides the digital map including high-risk contamination areas to the terminal computer wherein high-risk contamination areas are shown by marking the site investigation information to the coverage region based on the GPS location information.

21. The system according to claim 18, wherein the environmental assessment statistics server marks different icons on the digital map, wherein the different icons represent the different kinds of site investigation information, and provides the digital map marking different icons to the terminal computer.

22. The system according to claim 21, wherein herein the environmental assessment statistics server provides the digital map displaying site investigation information of the clicked icon to the terminal computer when a icon on the digital map is clicked.
